## Europäisches Patentamt

## European Patent Office

## Office européen des brevets

(11) Numéro de publication: **0 202 980**
**B1**

(12) **FASCICULE DE BREVET EUROPEEN**

(45) Date de publication du fascicule du brevet:
**16.08.89**

(51) Int. Cl.⁴: **G01T 1/16**

(21) Numéro de dépôt: **86400827.1**

(22) Date de dépôt: **17.04.86**

(54) Système pour détecter la présence d'un signal pur dans un signal bruité discret mesuré à taux moyen de bruit constant avec une probabilité de fausse détection inférieure à un taux de fausse détection prédéterminé.

(30) Priorité: **23.04.85 FR 8506164**

(43) Date de publication de la demande:
**26.11.86 Bulletin 86/48**

(45) Mention de la délivrance du brevet:
**16.08.89 Bulletin 89/33**

(84) Etats contractants désignés:
**BE DE GB IT**

(56) Documents cités:
**NUCLEONICS,
vol. 24, no. 8, août 1966, pages 118-121, New York, US;
W.L. NICHOLSON: "Statistics of net-counting-rate
estimation with dominant background corrections"
HEALTH PHYSICS,
vol. 32, no. 1, janvier 1977, pages 1-14, Pergamon Press,
Oxford, GB; J.J. DONN et al.: "The statistical
interpretation of counting data from measurements of
low-level radioactivity"
NUCLEAR INSTRUMENTS AND METHODS,
vol. 206, no. 3, mars 1983, pages 501-506, North-Holland
Publishing Co., Amsterdam, NL; T.J. SUMERLING:
"Calculating a decision level for use in radioactivity
counting experiments"**

(73) Titulaire: **COMMISSARIAT A L'ENERGIE ATOMIQUE,
31/33, rue de la Fédération, F-75015 Paris(FR)**

(72) Inventeur: **Poussier, Emile, 6, rue du Maréchal Foch,
F-21120 Is Sur Tille(FR)**
Inventeur: **Rambaut, Michel, 57H, rue de la Hacquinière,
F-91440 Bures sur Yvette(FR)**

(74) Mandataire: **Mongrédien, André et al, c/o
BREVATOME 25, rue de Ponthieu, F-75008 Paris(FR)**

## Description

La présente invention a pour objet un système pour détecter la présence d'un signal pur dans un signal bruité discret mesuré, cette détection étant réalisée avec une probabilité de fausse détection inférieure à un taux de fausse détection prédéterminé. L'invention concerne la détection des signaux discrets, c'est-à-dire les signaux produits par des événements discontinus. L'invention s'applique notamment à la détection des rayonnements corpusculaires tels que les rayons neutroniques ou les rayons gamma.

La détection d'un signal pur dans un signal bruité mesuré suppose que l'on peut supprimer le bruit dans ledit signal mesuré. L'invention concerne un procédé de détection lorsque le taux moyen de bruit est constant. Cette condition est pratiquement toujours réalisée pour les rayonnements de neutrons car il y a très peu de neutrons libres dans la nature. Elle est également souvent réalisée en un lieu donné pendant une certaine durée de temps pour les rayonnements gamma.

La détection d'un rayonnement corpusculaire particulier, par exemple nucléaire, se fait en présence d'un bruit corpusculaire ayant plusieurs causes. Dans le cas d'un rayonnement nucléaire, une partie du bruit est due au rayonnement cosmique et l'autre partie est due à la radioactivité naturelle des terrains et des roches. Il existe aussi un bruit dû au détecteur utilisé. Le rayonnement cosmique peut varier au cours du temps et le bruit corpusculaire dû aux roches et au terrain est essentiellement variable, selon le lieu où se fait la mesure. Un rayonnement particulier ne peut donc être détecté que si l'on connaît le bruit ou bien si l'on en a une estimation suffisante.

Le stockage des informations est effectué pendant une durée de temps limitée $\Delta T$. Ce stockage des informations se fait de façon discrète : lorsqu'une particule est détectée, le contenu d'une mémoire est augmenté d'une unité. En général, un ou plusieurs paramètres définissent l'évènement nucléaire détecté. Dans le cas où cet évènement ne dépend que d'un paramètre unique, celui-ci peut être par exemple l'énergie : c'est le cas typique de la détection d'un rayonnement gamma à l'aide d'un germanium intrinsèque ou d'un scintillateur NaI associé à un photomultiplicateur. Ce paramètre unique peut aussi être le temps, par exemple lorsque l'on mesure le temps de vol d'une particule. La condition de détection peut être également une fonction logique complexe dépendant de l'état de plusieurs détecteurs durant un intervalle de temps très court, en général de l'ordre de quelques dizaines de nanosecondes, par exemple dans le cas de la détection de particules dans une chambre à bulles.

Usuellement, pour savoir si un signal a été détecté à l'aide d'un stockage effectué durant un intervalle de temps $\Delta T$, la pratique courante consiste à apprécier de quelle valeur le comptage obtenu dépasse l'estimation du bruit dont on dispose. Ce bruit peut être estimé de différentes manières. Il peut être connu à l'avance par une mesure faite au préalable dans des circonstances où l'on est sûr qu'il n'y a pas de signal particulier. Il peut être également apprécié en cours d'expérience en extrapolant ou en interpolant les niveaux du signal détecté dans différents intervalles, par exemple énergétiques. Pour cela, il faut que le taux de comptage dans les intervalles où l'on est sûr qu'il n'y a pas de bruit est suffisant, pour pouvoir faire une estimation de la densité de probabilité du bruit dans les intervalles où l'on cherche à détecter un rayonnement particulier.

De manière classique, on estime qu'il y a effectivement un signal lorsque le taux de comptage N est tel que $N > B + K.\sqrt{B}$, où B est le taux moyen de bruit estimé et K une constante égale à quelques unités.

Ce critère connu de détection n'est pas satisfaisant car il est empirique, la valeur de K étant choisie de façon non-déterministe en se fondant sur des expériences antérieures.

Un but de l'invention est de fournir un système de détection fondé sur un critère rationnel, déduit des lois de probabilité d'apparition du bruit et du rayonnement attendu. La détection selon l'invention présente ainsi l'avantage de ne dépendre que d'un critère objectif.

Dans l'art antérieur, un taux de comptage n'est pris en compte que s'il est supérieur au taux moyen de bruit augmenté d'un certain nombre de fois l'écart type $\sqrt{B}$. Selon l'invention, on considère, au contraire, que tout dépassement du taux moyen de bruit constitue une information sur la présence ou l'absence d'un signal pur. Cette information est faible lorsque la différence entre le taux de comptage et le taux moyen de bruit est faible.

Plus la différence entre le taux de comptage et le taux moyen de bruit est important, plus l'information apportée par la mesure est importante et plus la probabilité de fausse détection est faible. Le critère pratique de détection d'un signal pur est donc l'obtention d'une information suffisante, c'est-à-dire supérieure à un seuil Im, c'est-à-dire une proba bilité de fausse détection inférieure à un taux de fausse détection prédéterminé.

La détection selon l'invention consiste donc à comparer la probabilité de fausse détection PF, définie par le taux de comptage N mesuré et une estimation du taux moyen de bruit constant M, à un taux de fausse détection prédéterminé TF. Un signal pur est détecté si ladite probabilité est inférieure audit taux.

Si on connaît la densité de probabilité du nombre d'événements détectés pendant chaque intervalle de temps, ce qui est généralement le cas, la probabilité de fausse détection peut être exprimée en fonction du taux de comptage N et du taux moyen de bruit estimé M. Cette densité de probabilité est par exemple celle de la loi de Poisson pour les rayonnements corpusculaires.

L'utilisation directe de la relation entre la probabilité de fausse détection PF, le taux de comptage N et le taux moyen de bruit M pour décider si un rayonnement particulier est détecté, peut conduire à des calculs longs et compliqués, car la probabilité de fausse détection PF est, en général, une fonction complexe du taux de comptage N et du taux moyen de bruit M. La durée du calcul peut notamment dépendre de la valeur du taux de comptage N et être incompatible avec une détection en temps réel, si la durée de chaque comptage est de l'ordre de la seconde par exemple.

Pour remédier à celà, et permettre une détection en temps réel, on se propose d'utiliser, pour chaque valeur du taux de fausse détection TF prédéterminé, une table contenant pour une pluralité de valeurs de taux de comptage la valeur du taux moyen de bruit associée telle que la probabilité de fausse détection PF pour ce taux moyen de bruit et ce taux de comptage soit égale au taux de fausse détection prédéterminé TF.

Selon une caractéristique préférée, le taux de comptage N mesuré est utilisé comme index d'entrée dans la table.

Le taux moyen de bruit $M_N$ contenu dans la table à l'index N est comparé au taux moyen de bruit constant estimé M. Ce dernier peut être calculé de différentes manières. Il peut notamment être pris égal à la moyenne d'un ensemble de taux de comptage précédant le dernier taux de comptage mesuré. La comparaison entre ces taux de bruit est équivalente à la comparaison entre la probabilité de fausse détection et le taux de fausse détection prédéterminé.

De manière générale, le taux moyen de bruit contenu dans la table n'est pas un nombre entier. Il peut alors être avantageux de remplacer la comparaison entre le taux moyen de bruit $M_N$ donné par la table et le taux moyen de bruit constant estimé M par une comparaison entre des valeurs entières fonctions de ces taux moyens de bruit.

Par exemple, si le taux moyen de bruit constant estimé M est obtenu en faisant la moyenne de k taux de comptages successifs, il peut être préférable de tabuler l'entier $T_N$ le plus proche de $k.M_N$. Le critère de détection porte alors simplement sur la comparaison entre deux entiers : $T_N$ correspondant au taux de comptage N, et $T = k.M = N_1 + N_2 + ... + N_k$ où M est le taux moyen de bruit estimé et $N_1$, $N_2$, ... sont les k taux de comptage précédant le dernier comptage.

Les caractéristiques et avantages de l'invention ressortiront mieux de la description qui va suivre, donnée à titre illustratif mais non limitatif, en référence aux dessins annexés, sur lesquels :

- la figure 1 représente schématiquement le système de l'invention,
- la figure 2 représente, sous forme d'un organigramme, le fonctionnement du moyen de traitement du système de détection de l'invention, dans le cas où on crée, pour chaque valeur du taux de fausse détection TF, une table contenant à l'index N la valeur du taux moyen de bruit $M_N$
- la figure 3 représente une variante de l'organigramme de la figure 2 lorsque la valeur contenue à l'index N de la table est un entier $T_N$ fonction du taux moyen de bruit $M_N$,
- la figure 4 est un graphe indiquant, pour différentes valeurs du taux de fausse détection prédéterminé TF, la présence ou l'absence de signal pur dans le signal bruité mesuré en fonction du taux de comptage N de la dernière mesure et de la somme T des taux de comptage des 64 mesures précédant la dernière mesure, cette somme T étant fonction du taux moyen de bruit connu.

L'invention s'applique à tous les rayonnements discrets, tels que les rayonnements corpusculaires, et concernent plus précisément l'analyse du signal délivré par un détecteur pour décider, avec une probabilité de fausse détection inférieure à un taux de fausse détection prédéterminé, si le signal analysé contient un signal pur dû à la présence d'une source particulière ou si ce signal se compose uniquement de bruit. A titre d'exemple, le procédé de l'invention s'applique notamment à la détection des rayons gamma et des rayons neutroniques.

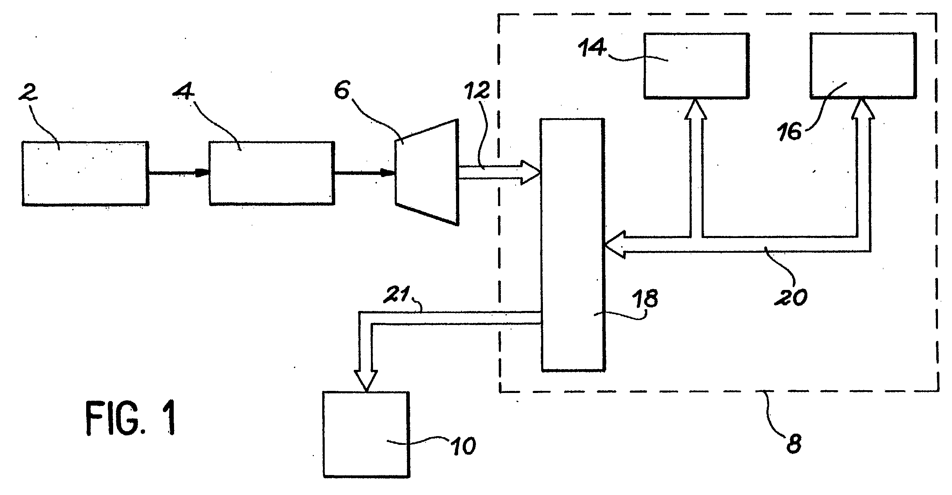

L'appareil représenté sur la figure 1 comprend un détecteur 2, un moyen de mise en forme 4, une échelle de comptage binaire 6 pouvant comprendre notamment un convertisseur analogique-numérique, un moyen de traitement 8 et un moyen de signalisation 10.

Le détecteur 2 dépend du rayonnement à détecter. Pour la détection de rayons gammas, ce détecteur peut être un germanium intrinsèque ou un scintillateur NaI associé à un photomultiplicateur ; pour la détection de neutrons, le détecteur est par exemple un compteur à He3.

Le détecteur 2 délivre une impulsion de tension pour chaque événement détecté. Cette impulsion est reçue par le moyen de mise en forme 4. Ce dernier peut comprendre notamment en série un amplificateur, un circuit de mise en forme et un discriminateur.

L'échelle de comptage binaire 6 est disposée en aval du moyen de mise en forme 4. Elle compte le nombre d'impulsions délivrées par le moyen 4 pendant une durée de comptage $\Delta T$

Le moyen de traitement 8 comprend un processeur 14, au moins une mémoire 16 et un circuit d'entrée-sortie 18. Ces éléments sont reliés par une voie 20 comprenant des lignes d'adresses, des lignes de données et des lignes de commande.

Le moyen de signalisation 10 est commandé par le processeur 14 à travers le circuit d'entréesortie 18 et une voie 21. Il peut comprendre notamment des moyens d'alerte visuels et sonores qui sont déclenchés lorsqu'un signal pur est détecté.

On va maintenant décrire le fonctionnement du système de détection de l'invention en considérant, à titre d'exemple, le cas de la détection d'un rayonnement corpusculaire, tel qu'un rayonnement gamma ou un rayonnement neutronique. Le nombre de particules détectées pendant une durée de mesure $\Delta T$ est une variable aléatoire dont la densité de probabilité est celle de la loi de POISSON. La probabilité P de détec ter durant le temps $\Delta T$, I événements dus aux rayonnements particuliers et J événements dus aux bruits est de :

$$P = e^{-(M_1 + M)} \cdot \frac{M_1^{I}}{I!} \cdot \frac{M^{J}}{J!}$$

où $M_1$ et M sont les taux moyens associés aux variables aléatoires représentant le nombre de particules détectées dues au rayonnement particulier et le nombre de particules détectées dues au bruit.

La probabilité pour qu'il existe pour N événements détectés, un événement au moins qui soit dû au rayonnement de taux $M_1$ est donc

$$P_1 = \sum_{I=1}^{N} P$$

et la probabilité pour qu'il n'existe dans les N événements détectés aucun événement dû au rayonnement est

$$P_2 = e^{-(M_1+M)} \cdot \frac{M^N}{N!}$$

La probabilité pour qu'il existe un rayonnement particulier, que le stockage N contienne ou non un événement qui lui soit dû, est alors égale à :

$$\int_{N\delta}^{\infty} (P_1 + P_2) dM_1$$

c'est-à-dire $e^{-M} \cdot \sum_{J=0}^{\infty} \frac{M^J}{J!}$

la probabilité complémentaire est la probabilité de fausse détection PF qui définit la probabilité pour qu'un rayonnement particulier soit détecté alors qu'aucun rayonnement particulier n'existe.

Le système de détection de l'invention comprend des moyens pour mesurer cette probabilité de fausse détection PF en fonction du taux de comptage N mesuré et du bruit de fond estimé M, et pour comparer cette probabilité à un taux de fausse détection TF prédéterminé.

Ce taux de fausse détection doit représenter un compromis acceptable entre le taux de fausse détection supportable par un opérateur au travail, et la distance de la source de rayonnement à partir de laquelle on souhaite pouvoir détecter cette source. A titre d'exemple, un taux de fausse détection TF de $10^{-3}$ représente à peu près une alarme fausse toutes les 15 mn dans le cas où chaque mesure dure une seconde. Cette valeur permet à un opérateur marchant à un mètre par seconde de déceler à 1,20 m une activité de 2 μc.

La première étape de la détection selon l'invention consiste à créer la table qui définit les couples $(N, M_N)$ correspondant à un taux de fausse détection TF prédéterminé. Cette table est constituée d'un ensemble de cellules de mémorisation. La cellule d'index I, où I est un entier, contient un nombre $M_I$ tel que la probabilité de fausse détection pour un taux de comptage I et un bruit $M_I$ soit égale au taux de fausse détection prédéterminé TF.

La deuxième étape de la détection de l'invention consiste, pour chaque taux de comptage N mesuré, à estimer le taux moyen de bruit M et à comparer ce taux au contenu de la cellule d'index N de la table.

On décide qu'un signal correspondant à un rayonnement particulier a été détecté si le taux moyen de bruit estimé est inférieur au taux moyen de bruit donné par la table.

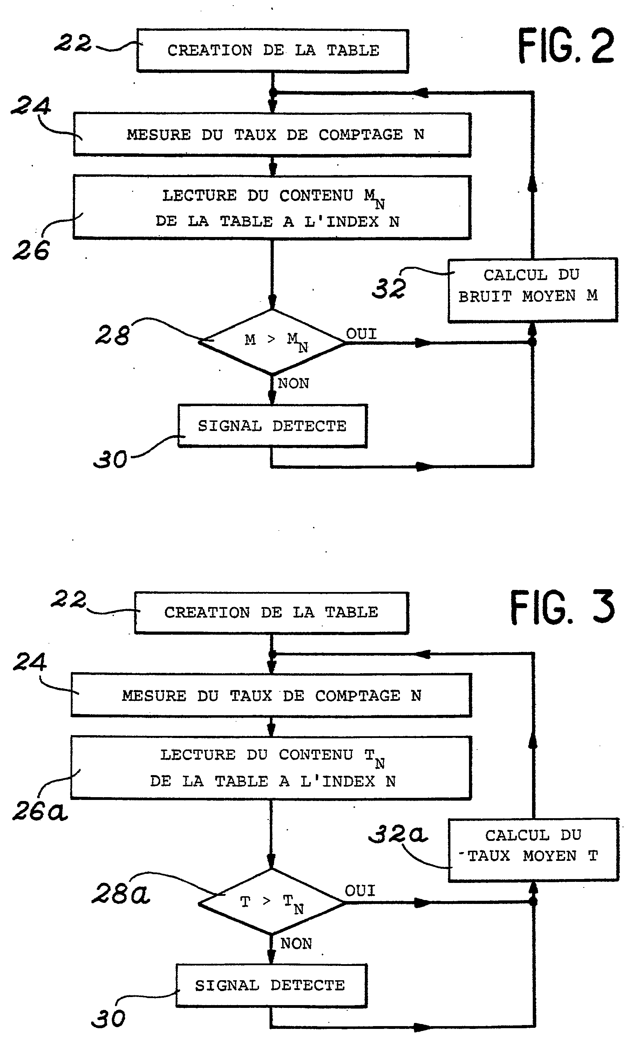

On a représenté sur la figure 2 un organigramme illustrant le fonctionnement du système de l'invention. Cet organigramme comporte des opérations représentées par des rectangles à une entrée et une sortie et une interrogation représentée par un losange à une entrée et deux sorties, l'une utilisée en cas de réponse positive et l'autre en cas de réponse négative.

L'opération 22 est l'opération de création de la table. Le contenu de cette table dépend du taux de fausse détection TF choisi. La table est stockée dans la mémoire 16. L'étape suivante du procédé de l'invention consiste à mesurer le taux de comptage N pendant une période de mesure. Cette opération porte la référence 24 sur la figure 2. Cette mesure est un simple comptage du nombre d'impulsions délivrées par le détecteur. L'opération 26 suivante est la lecture du contenu $M_N$ de la table à l'index N.

Ce nombre $M_N$ est ensuite comparé, dans l'étape d'interrogation 28, au taux moyen de bruit M estimé. Si $M_N$ est supérieur à ce taux connu, on décide qu'un rayonnement particulier a été détecté. Dans le cas contraire, on décide que le taux de comptage N est dû uniquement au bruit.

L'opération 32 de l'organigramme, qui est effectuée entre les opérations 28 ou 30 et l'opération 24, concerne l'évaluation du taux moyen de bruit M. Celui-ci peut être estimé de différentes manières. De manière préférée, le taux moyen de bruit est calculé en fonction d'au moins un taux de comptage précédemment mesuré. Il peut par exemple être défini comme la valeur moyenne de k taux de comptage des mesures précédant la dernière mesure, où k est un entier.

Ce calcul conduit à un taux moyen de bruit estimé M en général non entier. De même, les nombres $M_N$ contenus dans la table ne sont en général pas des nombres entiers. Le calcul du taux moyen de bruit estimé M et la comparaison entre ce taux et le nombre $M_N$ extrait de la table sont donc réalisés sur des nombres réels, ce qui augmente le temps de calcul. De plus, la mémorisation des nombres réels $M_N$ nécessite une mémoire relativement importante.

Selon une variante préférée de l'invention, l'étape d'interrogation 28 dans laquelle on compare le taux moyen de bruit estimé M et le taux $M_N$ extrait de la table est remplacée par la comparaison de deux nombres entiers. Ceci permet de simplifier le traitement en éliminant les calculs sur des nombres réels et ceci permet de diminuer l'encombrement de la table en mémoire.

Dans le cas où le taux moyen de bruit estimé M est égal à la valeur moyenne de k taux de comptage, la comparaison effectuée dans l'étape 28 peut porter par exemple sur un nombre T égal à la somme desdits k taux de comptage et sur un nombre $T_N$ égal à l'entier le plus proche de $k.M_N$, où $M_N$ est le taux de bruit correspondant à une probabilité de fausse détection prédéterminée TF pour un taux de comptage N.

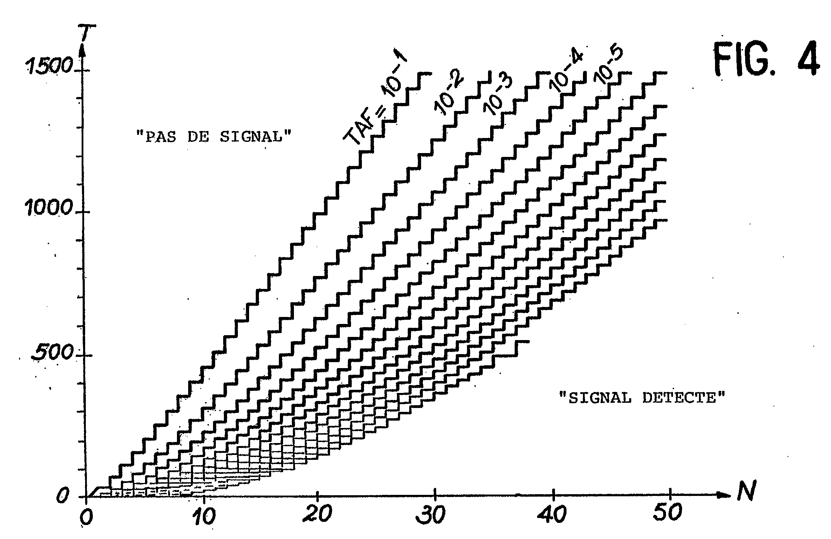

La figure 3 illustre l'organigramme associé au procédé de l'invention correspondant à la table (N, $T_N$). Sur cette figure, les opérations identiques à celles de la figure 2 portent les mêmes références. Les opérations référencées 22a, 26a, 28a et 32a correspondent respectivement aux opérations 22, 26, 28 et 32 dans lesquelles T et $T_N$ remplacent M et $M_N$.

La figure 4 illustre la table de décision utilisée dans le système de l'invention pour différentes valeurs du taux de fausse détection TF. Ce graphe porte en abscisse le taux de comptage N de la dernière mesure et en ordonnée la valeur $T_N$ égale à la plus proche valeur entière de 64.M, où M est le taux moyen de bruit pour lequel la probabilité de fausse détection PF est égale à TF si le taux de comptage est N. Cette ordonnée définit donc, à un facteur multiplicateur près, pris ici égal à 64 à titre d'exemple, le taux moyen de bruit.

La détection selon l'invention consiste à comparer la position du point de coordonnée (N, T) à la courbe du taux de fausse détection prédéterminé TF choisi, où T est égal à la somme des 64 derniers taux de comptage précédant la dernière mesure. Si ce point est au-dessus de la courbe, le taux de comptage est dû uniquement au bruit ; dans le cas contraire, le taux de comptage inclut un signal dû à un rayonnement particulier.

## Revendications

1. Système pour détecter la présence d'un signal pur dans un signal bruité discret mesuré à taux moyen de bruit constant, avec une probabilité de fausse détection PF inférieure un taux de fausse détection TF prédéterminé, comprenant en série un détecteur (2) pour convertir le rayonnement reçu en impulsions électriques, un moyen de mise en forme (4), une échelle de comptage binaire (6), un moyen de traitement (8) et un moyen de signalisation (10), ledit moyen de traitement comprenant un processeur (14), au moins une mémoire (16) et un circuit d'entrée-sortie (18), ledit système étant caractérisé en ce que le processeur:
- mesure le taux de comptage N pendant des périodes de temps successives égales,
- estime une valeur du taux moyen de bruit M,
- calcule la probabilité de fausse détection PF en fonction dudit taux de comptage N et du taux moyen de bruit estimé M,
compare ladite probabilité au taux de fausse détection TF prédéterminé, un signal pur étant détecté si ladite probabilité est inférieure audit taux.

2. Système selon la revendication 1, caractérisé en ce que la mémoire comprend une suite de cellules et contient une table pour une valeur du taux de fausse détection TF prédéterminé, la cellule d'index I contenant une valeur $M_I$ telle que la probabilité de fausse détection pour un taux de bruit moyen $M_I$ et un taux de comptage I est égale au taux de fausse détection, le processeur comparant, après chaque mesure, la valeur $M_N$ contenue à l'index N de la table, où N est le taux de comptage mesuré, au taux moyen de bruit estimé M, un signal pur étant détecté si $M_N \geq M$.

3. Système selon la revendication 2, caractérisé en ce que le processeur (14) évalue le taux moyen de bruit M par la moyenne de k taux de comptage précédant la dernière mesure, où k est un entier.

4. Système selon la revendication 1, caractérisé en ce que la mémoire comprend une suite de cellules et contient une table pour une valeur du taux de fausse détection TF prédéterminé, la cellule d'index I contenant une valeur entière $T_I$ égale à l'entier le plus proche de k.$M_I$, où k est un entier déterminé et $M_I$ est le taux moyen de bruit tel que la probabilité de fausse détection pour ledit taux moyen de bruit et un taux de comptage I est égale au taux de fausse détection, le processeur comparant, après chaque mesure, la valeur $T_N$ contenue à l'index N de la table, où N est le taux de comptage mesuré, à l'entier T le plus proche de k.M, où M est le taux moyen de bruit connu, un signal pur étant détecté si $T_N \geq T$.

5. Système selon la revendication 4, caractérisé en ce que le processeur (14) évalue le taux moyen de bruit M par la moyenne de k taux de comptage précédant la dernière mesure, où k est un entier, et en ce que l'entier T, comparé à la valeur $T_N$ de la table, est égal à la somme des k taux de comptage précédant le dernier taux de comptage N.

## Patentansprüche

1. System für die Feststellung eines reinen Signals in einem mit einem konstanten Mittelwert verrauschten Signal mit einer Wahrscheinlichkeit falscher Ermittlung PF, die kleiner als ein vorherbestimmter falscher Ermittlungswert TF ist, enthaltend in Serie einen Detektor (2), um die in elektrischen Impulsen enthaltene Strahlung umzuwandeln, eine Formgebungseinrichtung (4), eine binäre Zählkette (6), eine Verarbeitungseinrichtung (8) und eine Signalisationseinrichtung (10), wobei die Verarbeitungseinrichtung einen Prozessor (14), wenigstens einen Speicher (16) und eine Eingangs-Ausgangs-Schaltung (18) enthält, wobei das System dadurch gekennzeichnet ist, daß der Prozessor:
die Zählrate N während aufeinanderfolgender gleicher Zeitperioden mißt,
einen Mittelwert der Rauschrate M abschätzt,
die Wahrscheinlichkeit falsche Ermittlung PF als Funktion der genannten Zählrate N und der mittleren abgeschätzten Rauschrate M berechnet,
die genannte Wahrscheinlichkeit mit der vorbestimmten Rate falscher Ermittlung TF vergleicht, wobei ein reines Signal ermittelt wird, wenn die genannte Wahrscheinlichkeit kleiner als die genannte Rate ist.

2. System nach Anspruch 1, dadurch gekennzeichnet, daß der Speicher eine Folge von Zellen umfaßt und eine Tabelle für einen vorbestimmten Wert der Rate falscher Ermittlung TF enthält, wobei die Indexzelle I einen Wert $M_I$ derart enthält, daß die Wahrscheinlichkeit falscher Ermittlung für eine mittlere Rauschrate $M_I$ und eine Zählrate I gleich der Rate falscher Ermittlung ist, wobei der Prozessor nach jeder Messung den beim Index N der Tabelle enthaltenen Wert $M_N$, wobei N die gemessene Zählrate ist, mit der mittleren abgeschätzten Rauschrate M vergleicht, wobei ein reines Signal ermittelt wird, wenn MN ≥ M ist.

3. System nach Anspruch 2, dadurch gekennzeichnet, daß der Prozessor (14) die mittlere Rauschrate M durch den Mittelwert von k Zählraten abschätzt, die der letzten Messung vorausgehen, wobei k eine ganze Zahl ist.

4. System nach Anspruch 1, dadurch gekennzeichnet, daß der Speicher eine Folge von Zellen umfaßt und eine Tabelle für einen vorbestimmten Wert der Rate falscher Ermittlung TF enthält, wobei die Indexzelle I einen ganzzahligen Wert T$_I$ enthält, der gleich dem nächsten Ganzzahligen von k x M$_I$ ist, wobei k eine bestimmte ganze Zahl ist und M$_I$ die mittlere Rauschrate ist, so daß die Wahrscheinlichkeit falscher Ermittlung für die genannte mittlere Rauschrate und für eine Zählrate I gleich der Rate falscher Ermittlung ist, wobei der Prozessor nach jeder Messung den Wert T$_N$, der beim Index N der Tabelle enthalten ist, wobei N die gemessene Zählrate ist, mit der ganzen Zahl T, die k x M am nächsten ist, vergleicht, wobei M die mittlere bekannte Rauschrate ist, wobei ein reines Signal ermittelt wird, wenn TN ≥ T ist.

5. System nach Anspruch 4, dadurch gekennzeichnet, daß der Prozessor (14) die mittlere Rauschrate M durch Mittelung von k der letzten Messung vorangehenden Fehlraten abschätzt, wobei k eine ganze Zahl ist, und daß die ganze Zahl T, verglichen mit dem Wert T$_N$ der Tabelle, gleich der Summe der k dieser letzten Zählrate N vorangehenden Zählraten ist.

## Claims

1. System for detecting the presence of a pure signal in a discrete noisy signal measured at a constant average noise level, with a false detection probability PF below a predetermined false detection level TF, comprising in series a detector (2) for converting the radiation received into electrical pulses, a shaping means (4), a binary counting scale (6), a processing means (8) and a signalling means (10), said processing means comprising a processor (14), at least one memory (16) and an input-output circuit (18), characterized in that the processor measures the counting rate N during successive equal time periods, estimates a value of the average nose level M, calculates the false detection probability PF as a function of said counting rate N and the estimated average noise level M and compares said probability with the predetermined false detection level TF, a pure signal being detected if said probability is below said level.

2. System according to claim 1, characterized in that the memory comprises a sequence of cells and contains a table for one value of the predetermined false detection level TF, the cell of subscript 1 containing a value M$_I$, such that the false detection probability for an average noise level M$_I$ and a counting rate I is equal to the false detection level, the processor comparing, following each measurement, the value M$_N$ contained at subscript N of the table, in which N is the measured counting rate, with the estimated average noise level M, a pure signal being detected if M$_N$ ≥ M.

3. System according to claim 2, characterized in that the processor (14) evaluates the average noise level M for the mean value of k count rates preceding the final measurement, in which k is an integer.

4. System according to claim 1, characterized in that the memory comprises a sequence of cells and contains a table for one value of the predetermined false detection level TF, the cell of subscript I containing an integral value T$_I$ equal to the closest integer to k•M$_I$, in which k is a given integer and M$_I$ the average noise level such that the false detection probability for said average noise level and a count rate I is equal to the false detection level, the processor comparing, following each measurement, the value T$_N$ contained at subscript N of the table, in which N is the measured count rate, at the integer T closest to k•M, in which M is the known average noise level, a pure signal being detected if T$_N$ ≥ T.

5. System according to claim 4, characterized in that the processor (14) evaluates the average noise level M by the mean value of k count rates preceding the final measurement, in which k is an integer and wherein the integer T, compared with the value T$_N$ of the table, is equal to the sum of the k count rates preceding the final count rate N.

FIG. 1

# FIG. 2

22 — CREATION DE LA TABLE

24 — MESURE DU TAUX DE COMPTAGE N

26 — LECTURE DU CONTENU $M_N$ DE LA TABLE A L'INDEX N

28 — $M > M_N$

OUI

32 — CALCUL DU BRUIT MOYEN M

NON

30 — SIGNAL DETECTE

# FIG. 3

22 — CREATION DE LA TABLE

24 — MESURE DU TAUX DE COMPTAGE N

26a — LECTURE DU CONTENU $T_N$ DE LA TABLE A L'INDEX N

28a — $T > T_N$

OUI

32a — CALCUL DU TAUX MOYEN T

NON

30 — SIGNAL DETECTE

FIG. 4